# FASCICULE DE BREVET EUROPEEN

(11) **EP 0 912 382 B1**
(45) Date de publication et mention de la délivrance du brevet: **12.06.2002**
(21) Numéro de dépôt: 97924090.0
(22) Date de dépôt: 14.05.1997
(51) Int. Cl.: B60T 13/573

(54) **DISPOSITIF DE FREINAGE ASSISTE A RAPPORT D'ASSISTANCE VARIABLE**
BREMSKRAFTVERSTÄRKER MIT VERÄNDERBARER VERSTÄRKUNGSVERHALTUNG
POWER-ASSISTED BRAKING DEVICE WITH A VARIABLE ASSISTANCE RATIO

(30) Priorité: 23.07.1996 FR 9609242
(43) Date de publication de la demande: 06.05.1999
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); SACRISTAN, Fernando, E-08190 Sant Cugat des Valles (ES); SIMON BACARDIT, Juan, E-08400 Granollers (ES); ATTARD, Jean-Marc, F-60500 Chantilly (FR); LACROIX, Stéphane, F-77220 Tournan en Brie (FR)
(74) Mandataire: Bentz, Jean-Paul
(86) Numéro de dépôt international: FR9700852
(87) Numéro de publication internationale: WO9803385

(56) Documents cités:
- EP-A- 0 443 886
- DE-A- 2 628 204
- DE-A- 4 429 439
- GB-A- 2 236 563

## Description

La présente invention concerne les dispositifs de freinage assisté pour vehicules à moteur, comprenant un maître-cylindre commandant la pression hydraulique dans le circuit de freinage relié aux freins du vehicule, ce maître-cylindre étant susceptible d'être actionné par un servomoteur pneumatique d'assistance lorsque le conducteur du vehicule appuie sur la pédale de freinage.

De façon classique. le maître-cylindre est rempli d'un fluide de fremage et équipé d'un piston hydraulique principal destiné à recevoir une force d'actionnement se composant d'une force d'entrée et d'une force d'assistance agissant toutes deux suivant une direction axiale.

D'autre part, le servomoteur pneumatique d'assistance est susceptible d'être commandé par application de la force d'entrée sur une tige de commande contrôlant l'ouverture d'un clapet, pour exercer la force d'actionnement sur le piston hydraulique principal du maître-cylindre, le servomoteur comportant une enveloppe rigide séparée de façon étanche en deux chambres au moyen d'une cloison mobile susceptible d'être sollicitée par une différence de pression entre les deux chambres résultant de l'ouverture du clapet et d'entraîner un piston pneumatique mobile par rapport à l'enveloppe et portant le clapet, la force d'entrée étant transmise par l'intermédiaire d'un disque de réaction sur lequel s'appuie également le piston pneumatique pour lui fournir une partie au moins de la force d'assistance.

Un dispositif de ce type est bien connu dans l'art antérieur et se trouve par exemple décrit dans le document US-A-4 491 058.

Ces dispositifs de freinage présentent comme avantage, résultant de l'utilisation d'un piston pneumatique mobile par rapport à l'enveloppe rigide, que la course totale disponible pour la tige de commande, donc pour la pédale de frein, est relativement longue, ce qui constitue une condition nécessaire pour assurer le contrôle optimal de la décélération du véhicule au freinage.

Cependant, en cas de freinage brusque destiné à pallier à une situation d'urgence, ces dispositifs de freinage présentent l'inconvénient majeur de nécessiter, pour obtenir une pression dans le circuit de freinage relativement élevée, une course de la pédale de freinage sensiblement plus longue que celle qui est nécessaire pour obtenir la même pression dans le circuit lors d'un freinage dans ces conditions habituelles où le caractère d'urgence du freinage se fait moins sentir.

Etant donnée l'urgence du freinage, le conducteur ne se rend pas toujours compte de cette course allongée de la pedale de frein, puisqu'il appuie dessus avec une force importante variant rapidement pour obtenir l'effet de freinage imposé par cette situation d'urgence.

On a alors developpé des systèmes de freinage comportant des capteurs divers sensibles à la force appliquée sur la pédale de freinage et/ou à la vitesse d'application de cette force pour corriger, au moyen d'une électrovalve pneumatique commandée par un microprocesseur recevant les signaux issus de ces capteurs, la différence de pression régnant dans le servomoteur pour la faire augmenter plus rapidement, de façon à augmenter également la force d'assistance plus rapidement et donc de corriger l'allongement du temps de réponse du servomoteur par une augmentation de la force d'assistance.

Toutefois, bien que les capteurs et le microprocesseur aient des temps de réponse très brefs, les composants mécaniques sur lesquels les capteurs sont installés ont une inertie ou un temps de réponse relativement important, de sorte que le système correcteur électronique n'entre en jeu qu'après un temps relativement long après la détection de la situation d'urgence.

On a développé parallèlement des dispositifs de freinage assisté dans lesquels la réaction s'exerçant sur la tige de commande n'est plus fournie mécaniquement par un disque de réaction, mais par la pression hydraulique régnant dans le maître-cylindre.

Dans ces dispositifs, le piston hydraulique principal du maître cylindre comporte lui-même un cylindre mobile creux, communiquant avec le maître-cylindre, recevant une partie au moins de la force d'assistance, et à l'intérieur duquel coulisse, de façon étanche et suivant la direction axiale, un piston hydraulique secondaire susceptible de recevoir au moins la force d'entrée, des moyens élastiques exerçant une force élastique entre le piston hydraulique secondaire et le cylindre mobile et sollicitant le piston hydraulique secondaire en direction du maître-cylindre, au moins une ouverture étant pratiquée dans le cylindre mobile pour faire communiquer l'intérieur de ce dernier avec l'intérieur du maître-cylindre.

Un tel dispositif se trouve par exemple decrit dans le document FR-A-2 658 466.

Ces dispositifs à reaction hydraulique présentent comme avantage principal que, quelles que soient l'intensité de l'action de freinage ou la vitesse d'application de la force d'entrée, leur courbe caractéristique de fonctionnement, à savoir la courbe donnant la pression dans le maître-cylindre en fonction de l'intensité de la force à l'entrée du servomoteur, est inchangée. Ces dispositifs ne présentent donc pas d'allongement du temps de réponse en cas de freinage d'urgence.

Le fait d'équiper ces dispositifs à réaction hydraulique de capteurs de détection de situation d'urgence et d'une électrovalve pneumatique pour augmenter la pression dans la chambre arrière du servomoteur procure ainsi un net avantage par rapport aux dispositifs à réaction mécanique, puisqu'il contribue à améliorer la courbe de fonctionnement normale du servomoteur, plutôt que de chercher à corriger une courbe de fonctionnement dégradée.

La présente invention se place dans ce contexte et a pour objet de proposer un dispositif de freinage assisté à réaction hydraulique, qui présente des caractéristiques de fonctionnement améliorées en cas de freinage d'urgence, sans nécessiter de capteurs ni de circuit électronique complexe, et qui soit donc d'un coût réduit, tout en ayant un fonctionnement fiable en toutes circonstances.

Dans ce but, la présente invention propose un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de la force d'entrée sur une tige de commande solidaire d'un plongeur contrôlant l'ouverture d'un clapet à trois voies, pour exercer la force d'actionnement sur le piston hydraulique principal, le servomoteur comportant une enveloppe rigide séparée de façon étanche en au moins deux chambres au moyen d'au moins une cloison mobile, susceptible d'être sollicitée par une différence de pression entre les deux chambres résultant de l'ouverture du clapet à trois voies et d'entraîner un piston pneumatique, mobile par rapport à l'enveloppe, portant le clapet à trois voies et contribuant au moins à transmettre la force d'assistance, le piston hydraulique principal du maître cylindre comportant lui-même un cylindre mobile, creux, communiquant avec le volume intérieur du maître-cylindre, recevant une partie au moins de la force d'assistance, et à l'interieur duquel coulisse, de façon étanche et suivant la direction axiale, un piston hydraulique secondaire susceptible de recevoir au moins la force d'entrée, des premiers moyens élastiques exerçant une première force élastique entre le piston hydraulique secondaire et le cylindre mobile et sollicitant le piston hydraulique secondaire en direction du maître-cylindre. au moins une ouverture étant pratiquée dans le cylindre mobile pour faire communiquer l'interieur de ce dernier avec l'intérieur au maître-cylindre, le piston hydraulique secondaire comportant un moyen de clapet à deux voies normalement ouvert, susceptible d'interrompre la communication entre le volume interieur du maître-cylindre et l'intérieur du cylindre mobile.

Un tel dispositif de freinage assiste est par exemple connu du document EP-B-0 662 894.

Selon la présente invention, le piston hydraulique secondaire est composite, et comporte une première partie en butée, en position de repos, contre le cylindre mobile sous l'effet des premiers moyens élastiques, et une deuxième partie susceptible de coulisser par rapport à la première partie, des deuxièmes moyens élastiques exerçant vers l'arrière une deuxième force élastique sur la deuxième partie pour la solliciter en butée, en position de repos, contre la première partie.

Grâce à cette disposition, lors d'une action de freinage d'urgence, les première et deuxième parties du piston hydraulique secondaire peuvent coulisser l'une par rapport à l'autre et actionner le moyen de clapet à deux voies dans le sens de la fermeture, de sorte que le piston hydraulique secondaire ne reçoit la réaction de pression interne du maître-cylindre que sur une section inférieure à celle sur laquelle il reçoit cette reaction de pression lors d'un freinage dans des conditions d'urgence, d'où il resulte que le rapport d'assistance du dispositif de freinage assisté est supérieur en freinage d'urgence à celui qui est obtenu pour un freinage dans des conditions normales.

D'autres buts, caractéristiques et avantages de l'invention ressortiront clairement de la description qui suit d'un mode de réalisation donné à titre d'exemple nullement limitatif, en référence aux dessins annexés sur lesquels
- La Figure 1 représente une vue en coupe d'un dispositif de freinage assisté réalisé conformément à la présente invention,
- La Figure 2 représente une vue en coupe à plus grande échelle de la partie centrale du dispositif de la Figure 1.
- La Figure 3 représente une vue en coupe d'une première variante de réalisation de la partie centrale du dispositif de freinage de la Figure 1.
- La Figure 4 représente une vue en coupe d'une deuxième variante de realisation de la partie centrale au dispositif de freinage de la Figure 1,
- La Figure 5 représente une vue en coupe d'une troisième variante de réalisation de la partie centrale du dispositif de freinage de la Figure 1,
- La Figure 6 représente une vue en coupe d'une quatrième variante de réalisation de la partie centrale du dispositif de freinage de la Figure 1,
- La Figure 7 représente une vue en coupe d'une cinquième variante de réalisation de la partie centrale du dispositif de freinage de la Figure 1, et
- La Figure 8 représente la courbe de la pression engendrée par le maître-cylindre en fonction de l'effort appliqué à la pédale de freinage, cette courbe étant obtenue avec le dispositif de freinage conforme à la présente invention.

Dans la mesure où l'invention ne concerne qu'un perfectionnement apporté aux systèmes de freinage à assistance pneumatique, et où la constitution genérale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 100 et un maître-cylindre 200.

Le servomoteur 100 est prévu pour être fixé de façon habituelle sur un tablier (non représenté) de séparation entre un compartiment moteur d'un véhicule et l'habitacle de ce véhicule et pour être actionné par une pédale de freinage (non représentée) située dans cet habitacle. Le maître-cylindre 200 commandant le circuit de freinage hydraulique du véhicule est fixé sur la paroi avant du servomoteur 100.

Par convention, on appelle "avant" de l'ensemble servomoteur/maître-cylindre la partie de ce dernier tournée vers le maître-cylindre 200 et "arrière" de cet ensemble la partie tournée vers la pédale de frein 12. Sur les Figures, l'avant est ainsi a gauche et l'arrière à droite.

Le servomoteur 100 comprend lui-même une enveloppe rigide dont le volume intérieur est séparé en une chambre avant 12 et une chambre arrière 14, de façon étanche, par une cloison mobile 16 comprenant une membrane 18 et une jupe rigide 20 et susceptible d'entraîner un piston pneumatique 22 mobile a l'interieur de l'enveloppe 10.

La chambre avant 12, dont la face avant est fermée de façon étanche par le maître-cylindre 200, est en permanence raccordée à une source de dépression (non representée) à travers un raccord 15. La pression dans la chambre arrière 14 est contrôlee par une valve à trois voies 24, commandée par une tige de commande 26 reliée à la pédale de frein et solidaire d'un plongeur 28.

Lorsque la tige de commande 26 est en position de repos, c'est à dire tirée vers la droite, le clapet 24 établit une communication entre les deux chambres 12 et 14 du servomoteur. La chambre arrière 14 étant alors soumise à la même dépression que la chambre avant 12, le piston 22 est repoussé vers la droite, en position de repos, par un ressort 25.

L'actionnement de la tige de commande 26 vers la gauche a pour effet, dans un premier temps, de déplacer le clapet 24 de façon qu'il isole l'une de l'autre les chambres 12 et 14 puis, dans un deuxième temps, de déplacer ce clapet de façon qu'il ouvre la chambre arrière 14 à la pression atmosphérique.

La différence de pression entre les deux chambres 12 et 14 alors ressentie par la membrane 18 exerce sur la cloison mobile 16 une poussée qui tend à la déplacer vers la gauche et à lui permettre d'entraîner le piston 22 qui se déplace à son tour en comprimant le ressort 25.

L'effort de freinage exercé sur la tige de commande 26, ou "force d'entrée" et l'effort d'assistance au freinage, ou "force d'assistance", résultant de la poussée de la cloison mobile 16, sont alors, appliqués ensemble suivant l'axe X-X' du servomoteur 100 en direction du maître-cylindre 200, et se conjuguent pour constituer la force d'actionnement de ce dernier.

De façon plus précise, la force d'actionnement est appliquée sur le piston hydraulique principal 30 du maître-cylindre et en provoque le déplacement vers la gauche (sur les Figures), ce qui entraîne une élévation de pression du liquide de freinage présent dans le volume intérieur V du maître-cylindre 200, et un actionnement du frein (non représenté) relié à ce dernier

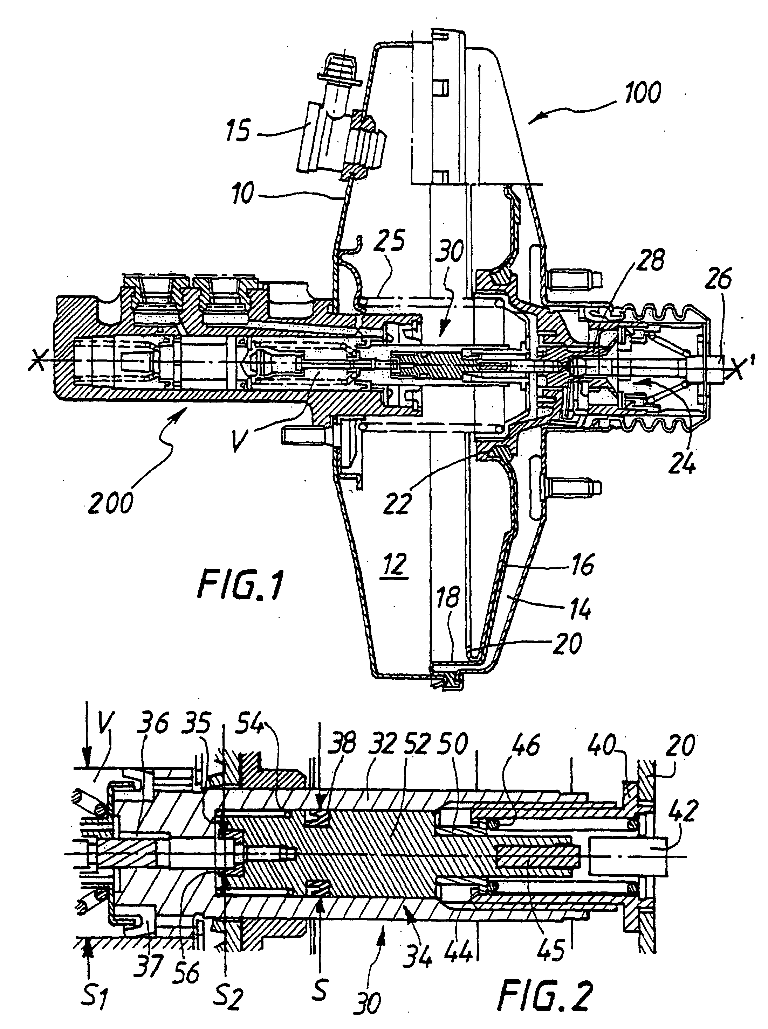

Comme on le voit mieux sur la Figure 2, le piston hydraulique principal 30 est en fait composité et comprend d'une part un cylindre 32 mobile et creux, et d'autre part un piston hydraulique secondaire 34.

Le volume interieur 35 du cylindre mobile creux 32 communique avec le volume intérieur V du maître-cylindre par l'intermédiaire d'ouvertures, telles que 36, ménagées dans le cylindre mobile suivant une direction axiale.

En dehors du passage de fluide que permettent ces ouvertures 36 entre le volume intérieur V du maître-cylindre 200 et le volume interieur 35 du cylindre mobile 32, ce cylindre mobile 32 coulisse de façon étanche dans le corps du maître-cylindre 200, l'étanchéité étant obtenue grâce au moins à un joint annulaire à lèvre 37.

Le piston hydraulique secondaire 34, quant à lui, coulisse à l'interieur du cylindre mobile 32, qu'il obture de façon étanche grâce à un joint annulaire 38.

Le cylindre mobile 32 est relié, par l'intermediaire d'une bague 40, à la jupe rigide 20 de manière à recevoir une partie au moins de la force d'assistance exercée par cette jupe rigide 20.

Le piston hydraulique secondaire 34 est disposé axialement, en regard d'une tige de poussée 42 solidaire du plongeur 28 et susceptible de lui transmettre au moins la force d'entrée exercée sur la tige de commande 26 elle-même solidaire du plongeur 28.

On va maintenant exposer le fonctionnement du dispositif décrit jusqu'à present.

Au repos, les différentes pièces mobiles occupent la position représentée sur les Figures 1 et 2, et en particulier le piston hydraulique secondaire 34 est en butée vers l'avant sur un épaulement radial 44 du cylindre mobile 32 sous l'effet de la sollicitation d'un ressort 46. Dans l'exemple représenté sur les Figures 1 et 2, l'épaulement 44 est formé à l'extrémité avant de la bague 40. Le clapet 24 autorise la communication entre les deux chambres 12 et 14, qui sont alors à la même pression réduite fournie par le raccord 15.

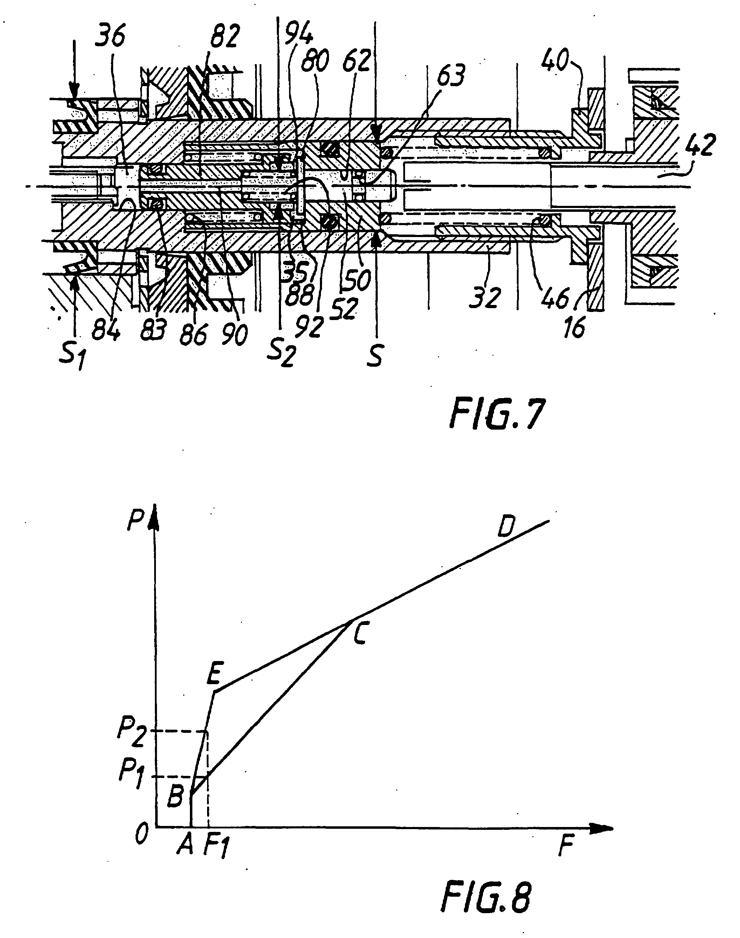

Un premier effort sur la pédale de frein sert à dépasser la précontrainte du ressort de la tige de commande 26 et à amener le clapet 24 dans une position où il isole les deux chambres 12 et 14 l'une de l'autre. Cette augmentation de l'effort sur la pédale de frein ne fournit donc aucune augmentation de pression dans le maitre-cylindre et elle est représentée sur la courbe de la Figure 8 par le segment OA.

Après cette course prédeterminée de la tige de commande 26, le clapet 24 ouvre a l'atmosphère la chambre arrière 14 du servomoteur 100, et une différence de pressions s'établit entre les deux chambres 12 et 14 du servomoteur. Cette différence de pressions engendre une force d'assistance qui fait avancer la jupe rigide 20 et le cylindre mobile 32.

La pression hydraulique dans le volume interne V du maître-cylindre 200 s'élève alors et s'établit, par circulation de fluide hydraulique à travers les ouvertures 36, dans le volume interne 35 du cylindre mobile 32, et s'exerce sur la section S du piston hydraulique secondaire 34.

Dans un premier temps, la force engendrée par cette pression s'exercant sur cette section S ne dépasse pas la précontrainte au repos du ressort 46, de sorte que le piston hydraulique secondaire 34 reste immobile par rapport au cylindre mobile 32, et à distance de la tige de poussée 42, aucune reaction n'étant alors ressentie sur la pédale de frein. Cette première phase de fonctionnement est représentée par le segment AB de la courbe de la Figure 8. La longueur du segment AB est appelée le « saut » du servomoteur.

Le saut du servomoteur peut être réglé à toute valeur désirée en ajustant la précontrainte au repos du ressort 46. On peut prévoir par exemple, comme on l'a représenté sur les Figures 1 et 2, que la bague 40 soit filetée et vissée dans le cylindre mobile 32 auquel elle transmet une partie au moins de la force d'assistance s'exerçant sur la jupe 20 en appui contre elle.

Le vissage de la bague 40 dans le cylindre mobile 32 a ainsi pour effet de comprimer le ressort 46, donc d'augmenter la précontrainte qu'exerce ce dernier sur le piston hydraulique secondaire 34 en direction du maître-cylindre, c'est-à-dire encore d'augmenter la valeur du saut.

Pour compenser la réduction de longueur résultant du vissage de la bague 40 dans le cylindre mobile 32, cette bague est par exemple réalisée en deux parties vissées l'une dans l'autre de manière à présenter une longueur totale réglable.

On peut également prévoir que la tige de poussée 42 soit elle-même réalisée en deux parties vissées l'une dans l'autre de manière à présenter une longueur totale réglable, le réglage de cette longueur permettant notamment de modifier l'ouverture du clapet à l'apparition du saut, quelle que soit la valeur donnée à ce dernier par vissage de la bague 40 dans le cylindre mobile 32.

Dans une deuxième phase de fonctionnement, la pression hydraulique augmente dans les volumes V et 35, et atteint une valeur prédéterminée, pour laquelle, s'appliquant sur la section S, elle devient suffisante pour vaincre la précontrainte au repos du ressort 46 Le piston hydraulique secondaire 34 se déplace alors vers l'arrière et vient au contact de la tige de poussée 42, comme illustré par le point B de la courbe de la Figure 8. On pourra avantageusement prévoir une pièce de butée 45 en caoutchouc ou un autre matériau elastomère à l'arrière du piston hydraulique secondaire 34, et/ou à l'avant de la tige de poussée 42 pour amortir le choc de ce contact et le bruit en resultant.

Le piston hydraulique secondaire 34 exerce alors sur la tige de poussée 42, et sur la pédale de frein, une force de réaction, dépendant de la force d'assistance, s'opposant à la force d'entrée, et permettant donc le contrôle de la première force par la seconde, comme on l'a représenté par le segment BC sur la courbe de la Figure 8. Le piston hydraulique secondaire 34 constitue alors un piston de réaction, soumis à la pression hydraulique régnant dans la chambre de réaction constituée par le volume interieur 35 du cylindre mobile 32.

La pente de ce segment BC, égale au rapport de la pression de sortie sur la force d'entrée, représente le rapport d'assistance du dispositif de freinage. Ce rapport d'assistance est aussi égal au rapport de la section S₁ du cylindre mobile 32 sur la section S du piston hydraulique secondaire 34.

La force d'assistance atteint son maximum lorsque la pression dans la chambre arrière du servomoteur atteint la pression atmosphérique, et ne peut donc plus augmenter. On atteint alors le phénomène connu sous le nom de saturation, et représenté par le segment CD sur la courbe de la Figure 8.

Dans toutes ces phases de fonctionnement, on voit notamment que, mise à part la course du plongeur 28 nécessaire pour actionner le clapet 24 et faire varier la pression dans la chambre arrière 14, et correspondant au segment OA de la courbe de la Figure 8, le plongeur 28 et la tige de poussée 42 se déplacent avec la cloison mobile 16.

Le fonctionnement du dispositif de freinage que l'on vient de décrire se reproduit à chaque action de freinage, quelle que soit la vitesse d'application de la force d'entrée sur la tige de commande 26, c'est à dire aussi bien pour un freinage normal où une faible décélération du véhicule est désirée, que pour un freinage d'urgence où le conducteur éprouve le besoin d'arrêter immédiatement son véhicule.

Dans ce dernier cas, il est bien sûr desirable d'obtenir rapidement un effort de freinage important, c'est à dire une pression élevée dans le circuit hydraulique de freinage. La solution connue, rappelée en préambule, et consistant par exemple à disposer au moins un capteur de force sur la pédale de freinage, et à calculer la vitesse de variation de cette force pour en déduire une situation d'urgence et activer une électrovalve pour mettre la chambre arrière au servomoteur directement à l'atmosphère, n'est qu'un palliatif puisqu'elle ne produit ses effets qu'après un certain temps de retard.

La présente invention permet d'atteindre ce résultat, c'est à dire obtenir immédiatement une pression de freinage élevée en cas de freinage d'urgence, par des moyens simples, efficaces et dont le temps de réponse est minimal.

Comme on le voit mieux sur la Figure 2, le piston de réaction 34 est lui-même composité. Il comporte une première partie 50, en butée, en position de repos, sur le cylindre mobile 32 sous l'effet de la sollicitation du ressort 46. Il comporte également une deuxième partie 52, susceptible de coulisser à l'intérieur de la première partie 50.

La deuxième partie 52 est en butée vers l'arrière, en position de repos, sur la première partie 50 sous l'effet de la sollicitation d'un deuxième ressort 54 disposé entre des épaulements du cylindre mobile 32 et de cette deuxième partie 52. Le deuxième ressort 54 a une précontrainte au repos inférieur a celle du ressort 46.

La deuxième partie 52 coulisse de façon étanche dans le cylindre mobile 32 grâce au joint annulaire 38, comme on l'a décrit plus haut. Elle est de plus munie d'un organe d'obturation de l'ouverture axiale 36 ménagée dans le cylindre mobile 32.

Selon le mode de réalisation de la Figure 2, cet organe d'obturation est constitué d'un joint annulaire 56 disposé sur la face avant de la deuxième partie 52 en regard de l'ouverture axiale 36. On peut également prévoir que le joint annulaire 56 soit disposé sur le cylindre mobile 32, au bord de l'ouverture axiale 36.

Lorsqu'un effort est appliqué sur la pédale de frein pour une action de freinage où seul un ralentissement normal du vehicule est desiré, l'ensemble que l'on vient de décrire fonctionne comme on l'a expliqué plus haut. En effet, les première et deuxième phases de fonctionnement se déroulent comme on l'a décrit, les première et deuxième parties se déplaçant ensemble vers l'arrière lorsque la pression hydraulique augmente dans la chambre de réaction 35.

La courbe caractéristique de fonctionnement du dispositif de freinage est alors conforme à la courbe de la Figure 8, en passant par les points O. A, B, C et D.

Par contre, lors d'une action de freinage dans des conditions d'urgence, c'est à dire quand l'effort d'entrée sur la pédale de frein augmente très rapidement pour atteindre une valeur très élevée, le plongeur 28 et la tige de poussée 42 avancent très rapidement, et en particulier ils avancent par rapport à la jupe rigide 20, la différence de pressions entre les chambres avant et arrière n'ayant pas eu le temps de s'établir et de mouvoir la cloison mobile 16. Ce phénomène a deux conséquences importantes.

D'une part, le mouvement supplémentaire vers l'avant du plongeur 28 provoque une ouverture plus importante du clapet 24, ce qui permet une montée en pression dans la chambre arrière 14 plus rapide.

D'autre part, et simultanément, la tige de poussée 42 vient au contact de la deuxième partie 52 et la fait coulisser vers l'avant dans la première partie 50 en comprimant le ressort 54, et sans comprimer le ressort 46 qui n'a alors pour seul effet que de maintenir la première partie 50 en appui sur l'epaulement radial 44. Dans ce mouvement, le joint annulaire 56 vient obturer le passage axial 36, de sorte que le volume de la chambre de réaction se trouve alors réduit au volume défini par le joint annulaire 56.

Il s'ensuit que la pression hydraulique dans le volume V du maître-cylindre s'exerce sur la deuxième partie 52, sur sa section S₂ définie par le diamètre intérieur du joint annulaire 56. Il en résulte donc que le rapport d'assistance dans cette condition de freinage d'urgence est égal au rapport de la section S₁ du cylindre mobile 32 sur la section S₂ de la deuxième partie 52 du piston hydraulique secondaire 34 sur laquelle la pression hydraulique s'exerce.

La section S₂ étant inférieure à la section S de la deuxième partie 52, il en résulte alors que dans une condition de freinage d'urgence, le rapport d'assistance est supérieur à celui qu'on obtient dans une condition de freinage normal. Le fonctionnement du dispositif de freinage est alors représenté par le segment BE sur la courbe de la Figure 8.

On voit ainsi que pour un même effort d'entrée instantané P₁, on obtient une pression instantanée P₂ notablement supérieure à la pression instantanée P₁ obtenue dans des conditions de freinage normal. D'autre part, le rapport d'assistance étant supérieur, on atteint plus vite le phénomène de saturation, représenté par le point E.

On pourra librement choisir ce deuxième rapport d'assistance et lui donner toute valeur desirée, et en particulier une valeur élevée en choisissant pour les diamètres du joint annulaire 56 et de l'ouverture 36 des valeurs faibles. L'ouverture 36 doit toutefois avoir un diamètre suffisant pour permettre la montée en pression hydraulique de la chambre de réaction 35 dans des conditions normales de fonctionnement, sans apporter de restriction dans la communication avec le volume V du maître-cylindre.

Lorsque le conducteur relâche son effort après une telle action de freinage d'urgence, le retour vers l'arrière de la tige de commande 26 a pour effet de mouvoir le plongeur 28 et le clapet 24 qui remet alors les chambres avant et arrière en communication l'une avec l'autre. Il en résulte alors un recul de la cloison mobile 16 et du cylindre mobile 32 sous l'effet du ressort 25, une baisse de pression dans le volume intérieur V du maître-cylindre, et un recul de la deuxième partie 52 sous l'effet du ressort 54. Les différentes pièces mobiles reprennent alors leur position de repos illustrée sur les Figures 1 et 2.

On a donc bien réalisé, selon la présente invention, un dispositif de freinage assisté qui présente des caractéristiques de fonctionnement améliorées en cas de freinage d'urgence, puisqu'il présente alors un rapport d'assistance nettement supérieur à celui qu'il présente dans des conditions normales de fonctionnement. Ce changement de rapport d'assistance est obtenu automatiquement sans nécessiter de capteurs ni de circuit électronique complexe, par la simple exploitation du fait que, dans ces conditions extrêmes, le plongeur 28 et la tige de poussée 42 présentent un mouvement relatif par rapport à la jupe rigide 20. Les moyens utilisés pour obtenir ce résultat sont relativement simples, et sont donc de coût réduit et de fonctionnement fiable en toutes circonstances, aussi bien dans des conditions normales de fonctionnement que dans des conditions d'urgence.

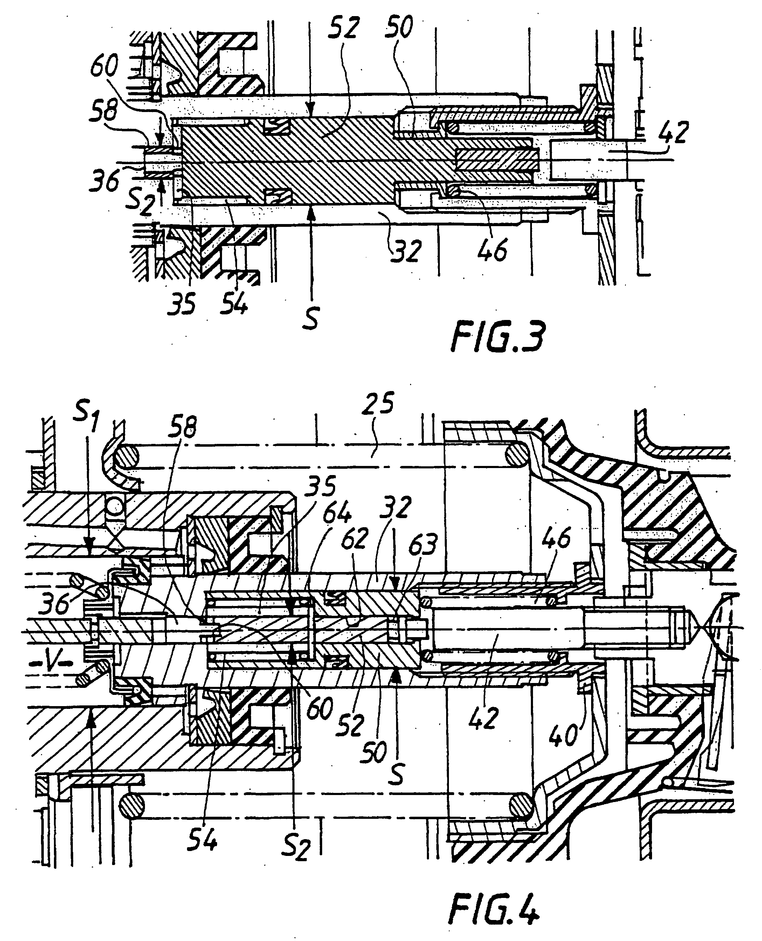

On a représenté sur les Figures 3 à 7 diverses variantes de réalisation du dispositif de freinage assisté qui vient d'être décrit. Sur ces Figures les mêmes éléments sont affectés des mêmes signes de référence.

On voit sur la Figure 3 que l'organe d'obturation de l'ouverture 36, porté par la deuxième partie 52, a seul été modifie par rapport au mode de realisation de la Figure 2. Selon cette variante, la deuxieme partie 52 est formée à son extrémité avant avec un prolongement axial creux 58, coulissant de façon quasi-étanche dans l'ouverture 36. Le prolongement 58 est de plus muni à sa partie arrière d'ouvertures où faisant communiquer l'ouverture 36 avec la chambre de reaction 35

Le fonctionnement est identique à celui qui a été décrit plus haut. Lors d'un freinage dans des conditions normales, la pression régnant dans le volume intérieur V du maître-cylindre est communiquée à la chambre de reaction 35 par les ouvertures 36 et 60, pour s'exercer sur la section S de la deuxième partie 52, et la faire reculer en même temps que la première partie 50.

Lors d'un freinage d'urgence, la tige de poussée 42 fait avancer la seconde partie 52. Le prolongement axial creux 58 coulisse alors dans l'ouverture 36 jusqu'à ce que les ouvertures 60 soient occultées. La communication entre le volume V du maître-cylindre et la chambre de réaction 35 est alors interrompue, la pression régnant à l'intérieur du maître-cylindre ne s'exerçant plus alors que sur la section S₂ de la deuxième partie 52 définie par le diamètre externe du prolongement 58.

Lorsque le conducteur relâche son effort, le rétablissement de la communication entre les chambres avant et arrière a pour effet de faire reculer la cloison mobile 16 et le cylindre mobile 32 sous l'effet du ressort 25, et de faire baisser la pression dans le volume intérieur V du maître-cylindre. Du fait de cette baisse de pression, et de l'étanchéité non parfaite entre le prolongement 58 et l'ouverture 36, la deuxième partie 52 peut reculer suffisamment pour découvrir les ouvertures 60 et faire communiquer la chambre de réaction 35 avec le volume intérieur V du maître-cylindre. La deuxième partie 52 peut alors reculer sous l'action du ressort 54, et les différentes pièces mobiles reprennent alors leur position de repos illustrée sur la Figure 3.

L'avantage de cette variante réside dans le fait que la section S₂ peut être définie avec plus de précision que dans le mode de réalisation précédent.

Selon la variante représentée sur la Figure 4, la première partie 50 est en butée vers l'avant sur le fond du cylindre mobile 32, et elle est percée d'un alésage axial 62 dans lequel est susceptible de coulisser de façon étanche la deuxième partie 52 grâce à un joint annulaire 63.

La deuxième partie 52 est de forme générale cylindrique, et comporte dans sa partie médiane une collerette 64 venant en butée vers l'arrière sue la première partie 50 sous l'effet de la sollicitation du ressort 54.

Comme dans le mode de réalisation de la Figure 3, la deuxième partie 52 est formée à son extrémité avant avec un prolongement axial creux 58, coulissant de façon quasi-étanche dans l'ouverture 30, et il est muni à sa partie arrière d'ouvertures 60 faisant communiquer l'ouverture 36 avec la chambre de reaction 35.

Le fonctionnement est identique à celui ces modes de réalisation precédents. Lors d'un freinage dans des conditions normales, la pression régnant dans le volume intérieur V du maître-cylindre est communiquée à la chambre de reaction 35 par les ouvertures 36 et 60, pour s'exercer sur la section S de la premiere partie 50, et la faire reculer en même temps que la deuxième partie 52 grâce á l'étanchéite du joint annulaire 63.

Lors d'un freinage d'urgence, la tige de poussée 42 fait avancer la seconde partie 52. Le prolongement axial creux 58 coulisse alors dans l'ouverture 36 jusqu'à ce que les ouvertures 60 soient occultées. La communication entre le volume V du maître-cylindre et la chambre de réaction 35 est alors interrompue, la pression régnant a l'intérieur du maître-cylindre ne s'exerçant plus alors que sur la section S₂ de la deuxième partie 52 définie par le diamètre externe du prolongement 58.

Lorsque le conducteur relâche son effort, comme dans le mode de réalisation précédent, le recul de la cloison mobile 16 et du cylindre mobile 32 sous l'effet du ressort 25 a pour effet de faire baisser la pression dans le volume interieur V du maître-cylindre. Du fait de cette baisse de pression, et de l'étanchéité non parfaite entre le prolongement 58 et l'ouverture 36, la deuxième partie 52 peut reculer suffisamment pour découvrir les ouvertures 60 et faire communiquer la chambre de réaction 35 avec le volume intérieur V du maître-cylindre. La deuxième partie 52 peut alors reculer sous l'action du ressort 54, et les différentes pièces mobiles reprennent alors leur position de repos illustrée sur la Figure 4.

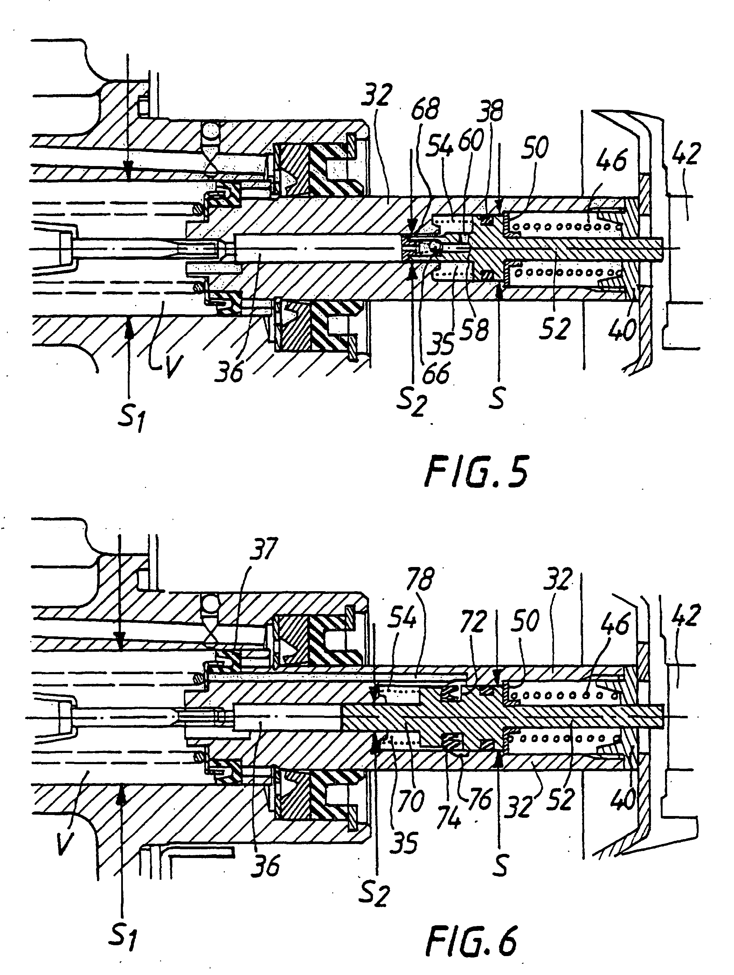

Selon la variante représentée sur la Figure 5, la première partie 50 est une collerette en appui sur un épaulement radial du cylindre mobile 32 sous l'action du ressort 46. La deuxième partie 52 est susceptible de coulisser dans la première partie 50 et dans le cylindre mobile 32 de façon étanche grâce au joint annulaire 38.

La deuxième partie 52 est encore formée à son extrémite avant avec le prolongement axial creux 58, muni à sa partie arrière d'ouvertures 60 faisant communiquer l'ouverture 36 avec la chambre de réaction 35.

Selon cette variante, le prolongement axial 58 comporte à son extrémité avant un clapet anti-retour 66, autorisant le passage de fluide de la chambre de reaction 35 vers le volume interieur V du maître-cylindre, mais interdisant le passage de fluide dans l'autre sens.

De plus, le prolongement axial 58 est formé sur une partie de sa longueur avec des gorges ou des rainures 68, permettant, dans la position représentée sur la Figure 5, une communication sans restriction entre l'ouverture axiale 36 et la chambre de reaction 35. La partie du prolongement axial 58 dépourvue de rainures 68 située en arrière de ces rainures 68, coulisse dans l'ouverture 36 de façon quasi-étanche.

Le fonctionnement est voisin de celui des modes de réalisation precédents. Lors d'un freinage dans des conditions normales, la pression régnant dans le volume intérieur V du maître-cylindre est communiquée à la chambre de réaction 35 par l'ouverture 36, les rainures 68 et les ouvertures 60, pour s'exercer sur la section S de la deuxième partie 52, et la faire reculer en même temps que la première partie 50, procurant ainsi la réaction voulue sur la tige de commande.

Lors d'un freinage d'urgence, la tige de poussée 42 fait avancer la seconde partie 52 Le prolongement axial creux 58 coulisse alors dans l'ouverture 36 jusqu'à ce que les rainures 68 soient complètement situées dans l'ouverture 36. Un mouvement supplémentaire vers l'avant de la deuxième partie 52 est permis grâce au clapet anti-retour 66, autorisant la circulation de fluide de la chambre de réaction 35 vers le volume intérieur V du maître-cylindre.

La communication de fluide du volume V du maître-cylindre vers la chambre de réaction 35 étant alors interrompue, la pression régnant à l'intérieur du maître-cylindre ne s'exerce plus alors que sur la section S₂ de la deuxième partie 52 définie par le diamètre externe du prolongement 58, comme dans les modes de réalisation précédents.

Lorsque le conducteur relâche son effort, la pression baisse dans le volume intérieur V du maître-cylindre. Du fait de cette baisse de pression, et de l'étanchéité non parfaite entre le prolongement 58 et l'ouverture 36, la deuxième partie 52 peut reculer suffisamment pour découvrir les rainures 68 et faire communiquer la chambre de réaction 35 avec le volume intérieur V du maître-cylindre. La deuxième partie 52 peut alors reculer sous l'action du ressort 54, et les différentes pièces mobiles reprennent alors leur position de repos illustrée sur la Figure 5.

Selon la variante représentée sur la Figure 6, la première partie 50 est, comme dans le mode de réalisation précédent, une collerette en appui sur un épaulement radial du cylindre mobile 32 sous l'action du ressort 46, et la deuxième partie 52 est susceptible de coulisser dans la première partie 50 et de façon étanche dans le cylindre mobile 32 grâce au joint annulaire 38.

La deuxième partie 52 est formée à son extrémité avant avec un prolongement axial 70, constitué cette fois d'un cylindre plein, et coulissant de façon quasi-étanche dans l'ouverture axiale 36, en communication avec le volume intérieur V du maître-cylindre. La chambre de réaction 35 est alors de forme annulaire.

Selon cette variante, la deuxième partie 52 est formée avec une gorge périphérique 72 dans laquelle est disposé un joint à lèvre 74, de même type que le joint à lèvre 37 utilisé dans le maître-cylindre. La gorge 72 est formée entre la portion de la deuxième partie 52 coulissant de façon étanche dans le cylindre mobile 32 et une portion avant de diamètre sensiblement plus petit.

Le cylindre mobile 32 est également formé avec une gorge annulaire 76, dans laquelle débouche un canal 78 formé dans le cylindre mobile 32 et communiquant avec le volume intérieur V du maître-cylindre. Dans la position de repos représentée sur la Figure 6, les gorges annulaires 72 et 76 sont sensiblement l'une en face de l'autre, de sorte que le joint à lèvre 74 autorise la communication entre le canal 78 et la chambre de réaction 35.

Lors d'un freinage dans des conditions normales, la pression régnant dans le volume intérieur V du maître-cylindre s'exerce d'une part dans la chambre de réaction annulaire 35 par le canal 78 et les gorges 76 et 72, et d'autre part sur le prolongement axial 70 de la deuxième partie 52, de sorte qu'elle s'exerce sur toute la section S de cette deuxième partie 52. Cette pression peut donc faire reculer cette deuxième partie 52 en même temps que la première partie 50, procurant ainsi la réaction voulue sur la tige de commande.

Lors d'un freinage d'urgence, la tige de poussée 42 fait avancer la seconde partie 52. Le prolongement axial plein 70 coulisse alors dans l'ouverture 36 jusqu'à ce que le joint à lèvre 74 quitte la gorge annulaire 76 et assure une étanchéité parfaite entre les première et deuxième parties 50 et 52. Un mouvement supplémentaire vers l'avant de la deuxième partie 52 est permis grâce au joint à lèvre 74, jouant le rôle d'un clapet anti-retour, et autorisant la circulation de fluide de la chambre de réaction 35 vers le canal 78 et vers le volume intérieur V du maître-cylindre.

La communication de fluide du volume V du maître-cylindre vers la chambre de reaction annulaire 35 étant alors interrompue par le joint à lèvre 74, interdisant cette communication, la pression régnant à l'intérieur du maître-cylindre ne s'exerce plus alors que sur la section S₂ de la deuxième partie 52 définie par le diamètre externe du prolongement axial 70. La pression communiquée par le canal 78 à la gorge 72 s'exerce sur les côtes avant et arrière de cette gorge, et elle est donc sans effet sur la deuxième partie 52.

Lorsque le conducteur relâche son effort, la pression baisse dans le volume interieur V du maître-cylindre. Du fait de cette baisse de pression, et de l'étanchéité non parfaite entre le prolongement 70 et l'ouverture 36, la deuxième partie 52 peut reculer suffisamment pour ramener le joint à lèvre 74 dans la gorge 76 du cylindre mobile 32, et ainsi permettre la communication entre la chambre de réaction 35 et le volume intérieur V du maître-cylindre. La deuxième partie 52 peut alors reculer sous l'action du ressort 54, et les différentes pièces mobiles reprennent alors leur position de repos illustrée sur la Figure 6.

La variante de réalisation représentée sur la Figure constitue en fait une variante de réalisation du mode de réalisation représenté sur la Figure 4. Selon cette dernière variante, la première partie 50 est en butée vers l'avant sur le fond du cylindre mobile 32, et elle est percée d'un alésage axial 62 dans lequel est susceptible de coulisser de façon étanche la deuxième partie 52 grâce à un joint annulaire 63.

La deuxième partie 52 est de forme générale cylindrique, solidaire à son extrémité avant d'un disque 80, de diamètre exterieur superieur à celui de l'alésage 62.

Selon cette variante, une troisième partie 82 est constituée d'un piston 82 susceptible de coulisser de façon étanche grâce à un joint annulaire 83 dans un alésage 84 du cylindre mobile 32. Cette troisième partie 82 est sollicitée vers l'arrière en position de repos par un ressort 86 de façon à venir en butée arrière, au repos, sur la première partie 50, par l'intermédiaire de dents ou de créneaux 88.

Cette troisième partie 82 est formée avec une ouverture centrale traversante 90, étagée de façon à ménager un épaulement sur lequel vient en appui un ressort 92, par ailleurs en appui sur le disque 80 de la deuxième partie 52.

La précontrainte au repos du ressort 86 est inférieure à celle du ressort 46, et la somme des précontraintes au repos des ressorts 86 et 92 est inférieure à celle du ressort 46, de façon à ce que la deuxième partie soit, au repos, en butée avant sur le cylindre mobile 32. De plus, le ressort 92 a une raideur inférieure a celle du ressort 86.

Selon cette variante l'organe d'obturation de la chambre de réaction 35 est constitué d'un joint annulaire 94, dispose sur la deuxième partie 52 où, comme on la représente, sur la troisième partie 82, autour de l'extrémité arrière de l'ouverture 90.

En fonctionnement, lors d'un freinage dans des conditions normales, la pression régnant dans le volume intérieur V du maître-cylindre est communiquée à la chambre de reaction 35 par l'ouverture 90, pour s'exercer sur la section S de la première partie 50, et la faire reculer en même temps que la deuxième partie 52 grâce à l'étanchéité du joint annulaire 63.

Lors d'un freinage d'urgence, la tige de poussée 42 fait avancer la seconde partie 52, qui coulisse alors dans l'alésage 62. La raideur du ressort 86 étant supérieure à celle du ressort 92, ce dernier se comprime le premier et permet à la deuxième partie de venir au contact de la troisième partie, ou plus exactement du joint annulaire 94. Ce faisant, la communication entre le volume V du maître-cylindre et la chambre de reaction 35 est interrompue. Le mouvement vers l'avant de l'ensemble deuxième partie/troisième partie n'est pas limité puisque cet ensemble se déplace dans la chambre de réaction qui a alors un volume constant.

La chambre de réaction 35 étant isolée du volume intérieur V du maître-cylindre, la pression régnant à l'intérieur du maître-cylindre ne s'exerce plus alors que sur la section S₂ de la deuxième partie 52 définie par le diamètre intérieur du joint annulaire 94.

Lorsque le conducteur relâche son effort, comme dans les modes de réalisation précédent, le recul de la cloison mobile 16 et du cylindre mobile 32 a pour effet de faire baisser la pression dans le volume intérieur V du maître-cylindre.

Simultanément, la tige de poussée 42 ayant reculé, le ressort 86 peut repousser la troisième partie 82 vers l'arrière, jusqu'à ce qu'elle vienne en butée sur la première partie 50, tandis que le ressort 92 peut repousser la deuxième partie 52 jusqu'à ce qu'elle vienne également en butée sur la première partie 50.

Les différentes pièces mobiles reprennent alors leur position de repos illustrée sur la Figure 7, et la chambre de réaction 35 est à nouveau en communication avec le volume intérieur du maître-cylindre.

On voit donc bien que les différentes variantes de réalisation que l'on vient d'exposer permettent d'obtenir les mêmes avantages que le premier mode de réalisation, à savoir des caractéristiques de fonctionnement améliorées en cas de freinage d'urgence. Chaque mode de réalisation présente ainsi un rapport d'assistance nettement supérieur à celui qu'a présenté dans des conditions normales de fonctionnement. Le changement de rapport d'assistance est obtenu automatiquement par la simple exploitation du mouvement relatif entre le plongeur 28 et le piston pneumatique 22. Les différents moyens utilisés pour obtenir ce resultat sont relativement simples, et sont donc de coût réduit et de fonctionnement fiable en toutes circonstances, aussi bien dans des conditions normales de fonctionnement que dans des conditions d'urgence.

Bien entendu, l'homme de l'art pourra apporter diverses modifications aux différents modes de réalisation qui ont été exposés, sans pour autant sortir du cadre ce l'invention telle que definie par les revendications annexées.

## Revendications

1. Dispositif de freinage assisté pour véhicule à moteur, comprenant d'une part un maître-cylindre (200) rempli d'un fluide de freinage et équipe d'un piston hydraulique principal (30) destiné à recevoir une force d'actionnement se composant d'une force d'entrée et d'une force d'assistance agissant toutes deux suivant une direction axiale, et d'autre part un servomoteur pneumatique d'assistance (100) susceptible d'être commandé par application de la force d'entrée sur une tige de commande (26) solidaire d'un plongeur (28) contrôlant l'ouverture d'un clapet à trois voies (24), pour exercer la force d'actionnement sur le piston hydraulique principal (30), le servomoteur comportant une enveloppe rigide (10) séparée de façon étanche en au moins deux chambres (12, 14) au moyen d'au moins une cloison mobile (16), susceptible d'être sollicitée par une différence de pression entre les deux chambres (12, 14) résultant de l'ouverture du clapet à trois voies (24) et d'entraîner un piston pneumatique (22), mobile par rapport à l'enveloppe (10), portant le clapet à trois voies (24) et contribuant au moins à transmettre la force d'assistance, le piston hydraulique principal (30) du maître cylindre (200) comportant lui-même un cylindre mobile (32), creux, communiquant avec le volume intérieur (V) du maître-cylindre, recevant une partie au moins de la force d'assistance, et à l'intérieur duquel coulisse, de façon étanche et suivant la direction axiale, un piston hydraulique secondaire (34) susceptible de recevoir au moins la force d'entrée, des premiers moyens élastiques (46) exerçant une première force élastique entre le piston hydraulique secondaire (34) et le cylindre mobile (32) et sollicitant le piston hydraulique secondaire (34) en direction du maître-cylindre (200), au moins une ouverture (36) étant pratiquée dans le cylindre mobile (32) pour faire communiquer l'intérieur (35) de ce dernier avec l'intérieur (V) du maître-cylindre, le piston hydraulique secondaire (34) comportant un moyen de clapet à deux voies (56, 58, 66, 74, 94) entre le volume intérieur (V) du maître-cylindre et l'intérieur (35) du cylindre mobile (32), **caractérisé en ce que** le piston hydraulique secondaire (34) est composite, et comporte une première partie (50) en butée, en position de repos, contre le cylindre mobile (32) sous l'effet des premiers moyens élastiques (46), et une deuxième partie (52) susceptible de coulisser par rapport à la première partie (50), **en ce que** des deuxièmes moyens élastiques (54, 92) exercent vers l'arrière une deuxième force élastique sur la deuxième partie (52) pour la solliciter en butée, en position de repos, contre la première partie (50), **en ce que** le moyen de clapet à deux voies, qui est normalement ouvert, est formé par la deuxième partie (52) du piston hydraulique secondaire et le piston hydraulique principal (30), ou par la deuxième partie (52) du piston hydraulique secondaire et une troisième partie (82) portée par le piston hydraulique principal, et **en ce qu'**un déplacement en direction du maître-cylindre (200) de la deuxième partie (52) du piston hydraulique secondaire par rapport au piston hydraulique principal, ou par rapport à la troisième partie portée par le piston hydraulique principal, provoque la fermeture du moyen de clapet à deux voies (56, 58, 66, 74, 94) et interrompt la communication entre le volume intérieur (v) du maître cylindre et l'intérieur (35) du cylindre mobile (32)

2. Dispositif de freinage assisté selon la revendication 1, **caractérisé en ce que** le plongeur (28) est solidaire d'une tige de poussée (42) actionnant le moyen de clapet à deux voies (56, 58, 66, 74, 94) dans le sens de la fermeture lors d'un mouvement relatif entre le plongeur (23) et la cloison mobile (16) correspondant à une variation de la force d'entrée supérieure à une valeur prédéterminée.

3. Dispositif de freinage assisté selon la revendication 2, **caractérisé en ce que** le moyen de clapet à deux voies (56) est constitué d'un joint annulaire (56) disposé sur une face avant de la deuxième partie (52) en regard de l'ouverture (36) pratiquée dans le cylindre mobile (32) ou sur le cylindre mobile (32) au bord de l'ouverture (36) pratiquée dans celui-ci.

4. Dispositif de freinage assisté selon la revendication 2, **caractérisé en ce que** le moyen de clapet à deux voies (58) est formé par un prolongement axial creux (58) de la deuxième partie (52), s'étendant vers l'avant, susceptible de coulisser de façon quasi-étanche dans l'ouverture (36) pratiquée dans le cylindre mobile (32) et muni à sa partie arrière d'au moins une ouverture (60).

5. Dispositif de freinage assisté selon la revendication 2, **caractérisé en ce que** la deuxième partie (52) est susceptible de coulisser de façon étanche dans la première partie (50), et **en ce que** le moyen de clapet à deux voies (58) est formé par un prolongement axial creux (58) de la deuxième partie (52), s'étendant vers l'avant, coulissant de façon quasi-étanche dans l'ouverture (36) pratiquée dans le cylindre mobile (32) et muni à sa partie arrière d'au moins une ouverture (60).

6. Dispositif de freinage assisté selon la revendication 2, **caractérisé en ce que** la deuxième partie (52) est formée avec un prolongement axial creux (58), muni à sa partie arrière d'au moins une ouverture (60), **en ce que** le moyen de clapet à deux voies (66) est formé par au moins une rainure (68) qui est prévue sur la périphérie extérieure et sur une partie de la longueur du prolongement axial creux (58) et qui coopère sélectivement avec un alésage axial (36) du cylindre mobile (32), et **en ce que** le prolongement axial creux (58) renferme un clapet anti-retour (66) autorisant le passage de fluide de l'intérieur (35) du cylindre mobile (32) vers le volume intérieur (V) du maître-cylindre (200) et interdisant le passage de fluide dans l'autre sens.

7. Dispositif de freinage assisté selon la revendication 2, **caractérisé en ce que** la deuxième partie (52) est formée avec un prolongement axial plein (70) susceptible de coulisser de façon quasi-étanche dans l'ouverture (36) pratiquée dans le cylindre mobile (32), et avec une gorge périphérique (72), le moyen de clapet à deux voies (74) étant formé par un joint à lèvre (74) disposé dans cette gorge périphérique (72), le cylindre mobile (32) étant formé avec une gorge annulaire (76) communiquant avec le volume intérieur (V) du maître-cylindre par un canal (78) formé dans le cylindre mobile (32), les gorges périphérique (72) et annulaire (76) étant sensiblement en face l'une de l'autre en position de repos.

8. Dispositif de freinage assisté selon la revendication 2, **caractérisé en ce que** la deuxième partie (52) est susceptible de coulisser de façon étanche dans la première partie (50), et **en ce qu'**une troisième partie (82) est susceptible de coulisser de façon étanche dans le cylindre mobile (32), la troisième partie (82) étant sollicitée vers l'arrière par des troisièmes moyens élastiques (86) pour venir en butée, en position de repos, sur la première partie (50), les deuxièmes moyens élastiques (92) étant disposés entre la deuxième partie (52) et la troisième partie (82), la troisième partie (82) étant formée avec une ouverture, centrale (90) faisant communiquer l'intérieur (35) du cylindre mobile (32) avec le volume intérieur du maître-cylindre (200), le moyen de clapet à deux voies (94) étant formé par un joint annulaire (94) disposé sur la deuxième partie (52) ou sur la troisième partie (82).

9. Dispositif de freinage assisté selon l'une des revendications 3 à 8, **caractérisé en ce que** la pression du fluide de freinage dans le volume intérieur (V) du maître-cylindre (200) s'applique sur une première section (S) du cylindre mobile creux (32) lorsque le moyen de clapet à deux voies (56, 58, 66, 74, 94) est ouvert, et sur une deuxième section (S₂) du piston hydraulique secondaire (34), inférieure à la première section (S), lorsque le moyen de clapet à deux voies (56, 58, 66, 74, 92) est fermé.

10. Dispositif de freinage assisté selon les revendications 3 et 9, **caractérisé en ce que** la deuxième section (S₂) est définie par le diamètre intérieur du joint annulaire (56) sur la face avant de la deuxième partie (52) ou sur le cylindre mobile (32) au bord de l'ouverture (36) pratiquée dans celui-ci.

11. Dispositif de freinage assisté selon l'une des revendications 4 à 7 et la revendication 9, **caractérisé en ce que** la deuxième section (S₂) est définie par le diamètre exterieur du prolongement axial (58, 70) de la deuxième partie (52).

12. Dispositif de freinage assisté selon les revendications 8 et 9, **caractérisé en ce que** la deuxième section (S₂) est définie par le diamètre intérieur du joint annulaire (94) disposé sur la deuxième partie (52) ou sur la troisième partie (82).

13. Dispositif de freinage assisté selon l'une quelconque des revendications précédentes, **caractérisé en ce qu'**une pièce de butée (45) en matériau élastomère est disposée l'arrière de la deuxième partie (52) et/ou à l'avant du plongeur (28).

14. Procédé de mise en oeuvre du dispositif de freinage assisté selon l'une quelconque des revendications précédentes, **caractérisé en ce que** la valeur prédéterminée de la variation de la force d'entrée est prédéterminée pour correspondre à une action de freinage dans des conditions d'urgence.

## Patentansprüche

1. Vorrichtung zur Bremsunterstützung für Motorfahrzeuge, die einerseits einen Hauptzylinder (200) aufweist, der mit einer Bremsflüssigkeit gefüllt und mit einem hydraulischen Hauptkolben (30) ausgestattet ist, der dazu vorgesehen ist, eine Betätigungskraft aufzunehmen, die sich aus einer Eingangskraft und einer Hilfskraft zusammensetzt, die beide entlang einer axialen Richtung wirken, und die andererseits einen pneumatischen Bremskraftverstärker (100) aufweist, der durch das Aufbringen der Eingangskraft auf eine Steuerstange (26) betätigt werden kann, die mit einem Tauchkolben (28) fest verbunden ist, der das Öffnen eines Dreiwege-Ventils (24) steuert, um die Betätigungskraft auf den hydraulischen Hauptkolben (30) auszuüben, wobei der Bremskraftverstärker ein starres Gehäuse (10) aufweist, das auf dichte Weise in wenigstens zwei Kammern (12, 14) mit Hilfe von wenigstens einer beweglichen Trennwand (16) geteilt ist, die mit einem aus dem Öffnen des Dreiwege-Ventils (24) resultierenden Druckunterschied zwischen den beiden Kammern (12, 14) beaufschlagt werden und einen pneumatischen Kolben (22) mitnehmen kann, der bezüglich des Gehäuses (10) beweglich ist, das Dreiwege-Ventil (24) trägt und wenigstens zur Übertragung der Hilfskraft beiträgt, wobei der hydraulische Hauptkolben (30) des Hauptzylinders (200) selbst einen beweglichen hohlen Zylinder (32) umfaßt, der mit dem inneren Volumen (V) des Hauptzylinders verbunden ist, wenigstens einen Teil der Hilfskraft aufnimmt und in dessen Innerem auf dichte Weise und entlang der axialen Richtung ein hydraulischer Sekundärkolben (34) gleitet, der wenigstens die Eingangskraft aufnehmen kann, wobei erste elastische Mittel (46) eine erste elastische Kraft zwischen dem hydraulischen Sekundärkolben (34) und dem beweglichen Zylinder (32) ausüben und den hydraulischen Sekundärkolben (34) in Richtung des Hauptzylinders (200) beaufschlagen, wobei wenigstens eine Öffnung (36) in dem beweglichen Zylinder (32) ausgebildet ist, um dessen Inneres (35) mit dem inneren Volumen (V) des Hauptzylinders zu verbinden, wobei der hydraulische Sekundärkolben (34) eine Zweiwegeventil-Anordnung (56, 58, 66, 74, 94) zwischen dem inneren Volumen (V) des Hauptzylinders (35) und dem Inneren (35) des beweglichen Zylinders (32) aufweist, **dadurch gekennzeichnet, daß** der hydraulische Sekundärkolben (34) zusammengesetzt ist und ein erstes Teil (50) aufweist, das in der Ruhestellung an dem beweglichen Zylinder (32) unter der Wirkung der ersten elastischen Mittel (46) anliegt, und ein zweites Teil (52), das bezüglich des ersten Teils (50) gleiten kann, daß zweite elastische Mittel (54, 92) eine zweite, nach hinten auf das zweite Teil (52) gerichtete zweite Kraft ausüben, um es in der Ruhestellung am ersten Teil (50) in Anlage zu bringen, daß die Zweiwegeventil-Anordnung, die normalerweise offen ist, durch das zweite Teil (52) des hydraulischen Sekundärkolbens und den hydraulischen Hauptkolben (30) gebildet ist oder durch das zweite Teil (52) des hydraulischen Sekundärkolbens und einem dritten Teil (82), das von dem hydraulischen Hauptkolben getragen wird, und daß eine Verschiebung, in Richtung des Hauptkolbens (200), des zweiten Teils (52) des hydraulischen Sekundärkolbens bezüglich des hydraulischen Hauptzylinders oder bezüglich des dritten Teils (82), das von dem hydraulischen Hauptkolben getragen wird, das Schließen der Zweiwegeventil-Anordnung (56, 58, 66, 74, 94) bewirkt und die Verbindung zwischen dem inneren Volumen (V) des Hauptzylinders und dem Inneren (35) des beweglichen Zylinders (32) unterbricht.

2. Vorrichtung zur Bremsunterstützung nach Anspruch 1, **dadurch gekennzeichnet, daß** der Tauchkolben (28) fest mit einer Schubstange (42) verbunden ist, die die Zweiwegeventil-Anordnung (56, 58, 66, 74, 94) in Schließrichtung bei einer Relativbewegung zwischen dem Tauchkolben (28) und der beweglichen Trennwand (16) betätigt, was einer Veränderung der Eingangskraft größer einem vorbestimmten Wert entspricht.

3. Vorrichtung zur Bremsunterstützung nach Anspruch 2, **dadurch gekennzeichnet, daß** die Zweiwegeventil-Anordnung (56) aus einer ringförmigen Dichtung (56) gebildet ist, die auf einer vorderen Fläche des zweiten Teils (52) gegenüber der Öffnung (36) angeordnet ist, welche in dem beweglichen Zylinder (32) ausgebildet ist, oder an dem beweglichen Zylinder (32), am Rand der Öffnung (36), die in diesem ausgebildet ist.

4. Vorrichtung zur Bremsunterstützung nach Anspruch 2, **dadurch gekennzeichnet, daß** die Zweiwegeventil-Anordnung (58) durch eine axiale, hohle Verlängerung (58) des zweiten Teils (52) gebildet ist, die sich nach vorn erstreckt, in quasi dichter Weise in der Öffnung (36) gleiten kann, die in dem beweglichen Zylinder (32) ausgebildet ist, und an ihrem hinteren Teil mit wenigstens einer Öffnung (60) versehen ist.

5. Vorrichtung zur Bremsunterstützung nach Anspruch 2, **dadurch gekennzeichnet, daß** das zweite Teil (52) in dichter Weise in dem ersten Teil (52) gleiten kann und daß die Zweiwegeventil-Anordnung (58) durch eine axialen, hohlen Verlängerung (58) des zweiten Teils (52) gebildet ist, die sich nach vorn erstreckt, in nahezu dichter Weise in der Öffnung (36) gleiten kann, welche in dem beweglichen Zylinder (32) ausgebildet ist, und an ihrem hinteren Teil mit wenigstens einer Öffnung (60) versehen ist.

6. Vorrichtung zur Bremsunterstützung nach Anspruch 2, **dadurch gekennzeichnet, daß** das zweite Teil (52) mit einer axialen, hohlen Verlängerung (58) gebildet ist, die an ihrem hinteren Teil mit wenigstens einer Öffnung (60) versehen ist, daß die Zweiwegeventil-Anordnung (66) durch wenigstens eine Rille (68) gebildet ist, die auf dem Außenumfang und auf einem Teil der Länge der axialen, hohlen Verlängerung (58) vorgesehen ist und die selektiv mit einer axialen Bohrung (36) des beweglichen Zylinders (32) zusammenwirkt, und daß die axiale, hohle Verlängerung (58) ein Rückschlagventil (66) umschließt, das den Durchfluß eines Fluids aus dem Inneren (35) des beweglichen Zylinders (32) zu dem inneren Volumen (V) des Hauptzylinders (200) gestattet und den Durchfluß von Fluid in die andere Richtung verhindert.

7. Vorrichtung zur Bremsunterstützung nach Anspruch 2, **dadurch gekennzeichnet, daß** das zweite Teil (52) mit einer axialen, massiven Verlängerung (70) gebildet ist, die in quasi dichter Weise in der Öffnung (36) gleiten kann, welche in dem beweglichen Zylinder (32) ausgebildet ist, und mit einer Umfangsnut (72) gebildet ist, wobei die Zweiwegeventil-Anordnung (74) durch eine Lippendichtung (74) gebildet ist, die in der Umfangsnut (72) angeordnet ist, wobei der bewegliche Zylinder (32) mit einer ringförmigen Nut (76) gebildet ist, die mit dem inneren Volumen (V) des Hauptzylinders über einen Kanal (78) verbunden ist, der in dem beweglichen Zylinder (32) gebildet ist, wobei die Umfangsnut (72) und die ringförmige Nut (76) in der Ruhestellung einander im wesentlichen gegenüberliegen.

8. Vorrichtung zur Bremsunterstützung nach Anspruch 2, **dadurch gekennzeichnet, daß** das zweite Teil (52) in dichter Weise in dem ersten Teil (50) gleiten kann, und daß ein drittes Teil (82) in dichter Weise in dem beweglichen Zylinder (32) gleiten kann, wobei das dritte Teil (82) nach hinten durch dritte elastische Mittel (86) beaufschlagt ist, um in der Ruhestellung an dem ersten Teil (50) anzuliegen, wobei die zweiten elastischen Mittel (92) zwischen dem zweiten Teil (52) und dem dritten Teil (82) angeordnet sind, wobei das dritte Teil (82) mit einer zentralen Öffnung (90) ausgebildet ist, die das Innere (35) des beweglichen Zylinders (32) mit dem inneren Volumen des Hauptzylinders (200) verbindet, wobei die Zweiwegeventil-Anordnung (94) durch eine ringförmige Dichtung (94) gebildet ist, die an dem zweiten Teil (52) oder an dem dritten Teil (82) angeordnet ist.

9. Vorrichtung zur Bremsunterstützung nach einem der Ansprüche 3 bis 8, **dadurch gekennzeichnet, daß** der Druck der Bremsflüssigkeit in dem inneren Volumen (V) des Hauptzylinders (200) auf einen ersten Querschnitt (S) des beweglichen Hohlzylinders (32) wirkt, wenn die Zweiwegeventil-Anordnung (56, 58, 66, 74, 94) offen ist, und, wenn die Zweiwegeventil-Anordnung (56, 58, 66, 74, 92) geschlossen ist, auf einen zweiten Querschnitt (S₂) des zweiten hydraulischen Kolbens (34) wirkt, der kleiner ist als der erste Querschnitt (S).

10. Vorrichtung zur Bremsunterstützung nach den Ansprüchen 3 und 9, dadurch gekennzeichent, daß der zweite Querschnitt (S₂) durch den inneren Durchmesser der ringförmigen Dichtung (56) auf der vorderen Fläche des zweiten Teils (52) oder an dem beweglichen Zylinder (32) am Rand der Öffnung (36) definiert ist, die in diesem ausgebildet ist.

11. Vorrichtung zur Bremsunterstützung nach einem der Ansprüche 4 bis 7 und dem Anspruch 9, **dadurch gekennzeichnet, daß** der zweite Querschnitt (S₂) durch den äußeren Durchmesser der axialen Verlängerung (58, 70) des zweiten Teils (52) definiert ist.

12. Vorrichtung zur Bremsunterstützung nach den Ansprüchen 8 und 9, **dadurch gekennzeichnet, daß** der zweite Querschnitt (S₂) durch den inneren Durchmesser der ringförmigen Dichtung (94) definiert ist, die auf dem zweiten Teil (52) oder an dem dritten Teil (82) angeordnet ist.

13. Vorrichtung zur Bremsunterstützung nach einem der vorstehenden Ansprüche, **dadurch gekennzeichnet, daß** ein Anschlagstück (45) aus elastomerem Material hinter dem zweiten Teil (52) und/oder vor dem Tauchkolben (28) angeordnet ist.

14. Verfahren zur Verwendung der Vorrichtung zur Bremsunterstützung nach einem der vorstehenden Ansprüche, **dadurch gekennzeichnet, daß** der vorbestimmte Wert der Änderung der Eingangskraft vorbestimmt ist, um einer Bremsbetätigung in Notsituationen zu entsprechen.

## Claims

1. Boosted braking device for a motor vehicle, comprising on the one hand a master cylinder (200) filled with a brake fluid and equipped with a main hydraulic piston (30) intended to receive an actuating force composed of an input force and of a boost force both acting in an axial direction, and on the other hand a pneumatic booster (100) which can be operated by applying the input force to an operating rod (26) secured to a plunger (28) controlling the opening of a three-way valve (24), so as to exert the actuating force on the main hydraulic piston (30), the booster including a rigid casing (10) divided in leaktight fashion into at least two chambers (12, 14) by means of at least one moving partition (16) which can be acted upon via a difference in pressure between the two chambers (12, 14) resulting from the opening of the three-way valve (24) and of driving along a pneumatic piston (22) which can move with respect to the casing (10), bearing the three-way valve (24) and contributing at least to transmitting the boost force, the main hydraulic piston (30) of the master cylinder (200) itself including a hollow moving cylinder (32) communicating with the interior volume (V) of the master cylinder, receiving at least part of the boost force, and inside which there slides, in leaktight fashion and in the axial direction, a secondary hydraulic piston (34) capable of receiving at least the input force, first elastic means (46) exerting a first elastic force between the secondary hydraulic piston (34) and the moving cylinder (32) and urging the secondary hydraulic piston (34) in the direction of the master cylinder (200), at least one opening (36) being made in the moving cylinder (32) in order to make the interior (35) of the latter communicate with the interior (V) of the master cylinder, the secondary hydraulic piston (34) including a two-way valve means (56, 58, 66, 74, 94) between the interior volume (V) of the master cylinder and the interior (35) of the moving cylinder (32), **characterized in that** the secondary hydraulic piston (34) is composite and includes a first part (50) which, in the position of rest, is in abutment against the moving cylinder (32) under the effect of the first elastic means (46), and a second part (52) capable of sliding with respect to the first part (50), **in that** second elastic means (54, 92) exert a second elastic force backwards on the second part (52) in order to urge it into abutment, in the position of rest, against the first part (50), **in that** the two-way valve means, which is normally open, is formed by the second part (52) of the secondary hydraulic piston and the main hydraulic piston (30), or by the second part (52) of the secondary hydraulic piston and a third part (82) borne by the main hydraulic piston, and **in that** a movement of the second part (52) of the secondary hydraulic piston towards the master cylinder (200) with respect to the main hydraulic piston, or with respect to the third part borne by the main hydraulic piston causes the two-way valve means (56, 58, 66, 74, 94) to close and interrupts the communication between the interior volume (v) of the master cylinder and the interior (35) of the moving cylinder (32).

2. Boosted braking device according to Claim 1, **characterized in that** the plunger (28) is secured to a push rod (42) actuating the two-way valve means (56, 58, 66, 74, 94) in the direction of closure upon a relative movement between the plunger (28) and the moving partition (16) corresponding to a variation greater than a predetermined value in the input force.

3. Boosted braking device according to Claim 2, **characterized in that** the two-way valve means (56) consists of an annular seal (56) 'arranged on a front face of the second part (52) facing the opening (36) made in the moving cylinder (32) or on the moving cylinder (32) at the edge of the opening (36) made therein.

4. Boosted braking device according to Claim 2, **characterized in that** the two-way valve means (58) is formed of a hollow axial extension (58) of the second part (52), extending forwards, and capable of sliding in almost leaktight fashion in the opening (36) made in the moving cylinder (32) and equipped at its rear part with at least one opening (60).

5. Boosted braking device according to Claim 2, **characterized in that** the second part (52) is capable of sliding in leaktight fashion in the first part (50), and **in that** the two-way valve means (58) is formed by a hollow axial extension (58) of the second part (52), extending forwards, sliding in almost leaktight fashion in the opening (36) made in the moving cylinder (32) and equipped at its rear part with at least one opening (60).

6. Boosted braking device according to Claim 2, **characterized in that** the second part (52) is formed with a hollow axial extension (58), equipped at its rear part with at least one opening (60), **in that** the two-way valve means (66) is formed by at least one channel (68) provided on the outside periphery and along part of the length of the hollow axial extension (58) and which interacts selectively with an axial bore (36) of the moving cylinder (32), and **in that** the hollow axial extension (58) contains a non-return valve (66) allowing fluid to pass from the interior (35) of the moving cylinder (32) towards the interior volume (V) of the master cylinder (200) and preventing fluid from passing in the other direction.

7. Boosted braking device according to Claim 2, **characterized in that** the second part (52) is formed with a solid axial extension (70) capable of sliding in almost leaktight fashion in the opening (36) made in the moving cylinder (32), and with a peripheral groove (72), the two-way valve means (74) being formed by a lip seal (74) arranged in this peripheral groove (72), the moving cylinder (32) being formed with an annular groove (76) communicating with the interior volume (V) of the master cylinder via a channel (78) formed in the moving cylinder (32), the peripheral grooves (72) and the annular grooves. (76) lying substantially opposite one another in the position of rest.

8. Boosted braking device according to Claim 2, **characterized in that** the second part (52) can slide in leaktight fashion in the first part (50), and **in that** a third part (82) is capable of sliding in leaktight fashion in the moving cylinder (32), the third part (82) being urged backwards by third elastic means (86) so that in the position of rest they come into abutment on the first part (50), the second elastic means (92) being arranged between the second part (52) and the third part (82), the third part (82) being formed with a central opening (90) making the interior (35) of the moving cylinder (32) communicate with the interior volume of the master cylinder (200), the two-way valve means (94) being formed by an annular seal (94) arranged on the second part (52) or on the third part (82).

9. Boosted braking device according to one of Claims 3 to 8, **characterized in that** the pressure of the brake fluid in the interior volume (V) of the master cylinder (200) is applied to a first cross-section (S) of the hollow moving cylinder (32) when the two-way valve means (56, 58, 66, 74, 94) is open, and to a second cross-section (S₂) of the secondary hydraulic piston (34), this cross-section being smaller than the first cross-section (S), when the two-way valve means (56, 58, 66, 74, 92) is closed.

10. Boosted braking device according to Claims 3 and 9, **characterized in that** the second cross-section (S₂) is defined by the inside diameter of the annular seal (56) on the front face of the second part (52) or on the moving cylinder (32) at the edge of the opening (36) made therein.

11. Boosted braking device according to one of Claims 4 to 7 and Claim 9, **characterized in that** the second cross-section (S₂) is defined by the outside diameter of the axial extension (58, 70) of the second part (52).

12. Boosted braking device according to Claims 8 and 9, **characterized in that** the second cross-section (S₂) is defined by the inside diameter of the annular seal (94) arranged on the second part (52) or on the third part (82).

13. Boosted braking device according to any one of the preceding claims, **characterized in that** a buffer piece (45) made of elastomeric material is arranged at the rear of the second part (52) and/or at the front of the plunger (28).

14. Method of implementing the boosted braking device according to any one of the preceding claims, **characterized in that** the predetermined value for the variation in the input force is predetermined so as to correspond to a braking action under emergency conditions.
